# EUROPÄISCHE PATENTSCHRIFT

(11) **EP 1 954 970 B1**
(45) Veröffentlichungstag und Bekanntmachung des Hinweises auf die Patenterteilung: **05.10.2011**
(21) Anmeldenummer: 06821347.9
(22) Anmeldetag: 07.11.2006
(51) Int. Cl.: F16L 33/04

(54) **SPANN- ODER ROHRSCHELLE**
PIPE COLLAR OR CLAMP
COLLIER DE SERRAGE OU D'ATTACHE POUR TUYAUX

(30) Priorität: 23.11.2005 CH 18712005
(43) Veröffentlichungstag der Anmeldung: 13.08.2008
(73) Patentinhaber: Straub Werke AG, 7323 Wangs (CH)
(72) Erfinder: MANNHART, Hubert, CH-7320 Sargans (CH)
(74) Vertreter: Rosenich, Paul
(86) Internationale Anmeldenummer: PCT/IB2006/054136
(87) Internationale Veröffentlichungsnummer: WO 2007/060563

(56) Entgegenhaltungen:
- EP-A- 0 989 349
- FR-A- 1 358 890
- FR-A- 2 749 917
- US-A- 2 409 576
- US-A1- 2003 072 636

## Beschreibung

Die Erfindung bezieht sich auf eine Spann- oder Rohrschelle mit verformbarem, im wesentlichen zylindrischen, wenigstens einen Längsschlitz aufweisenden Gehäuse, wobei die am Längsschlitz einander gegenüberliegenden Bereiche des Gehäuses als umgebogene Laschen ausgebildet sind, wobei die Laschen für die Aufnahme von Hohlbolzen ausgebildet sind, und wobei die Spann- oder Rohrschelle mittels die Hohlbolzen quer durchsetzenden, etwa tangential zum Gehäuse angeordneten Spannschrauben und damit verbindbaren Muttern in den Hohlbolzen verspannbar ist.

Spann- oder Rohrschellen dienen einerseits zum Verbinden oder Reparieren von undicht gewordenen Rohren und andererseits zum Befestigen von Rohrleitungen in Gebäuden oder Fahrzeugen. Im ersteren Fall dienen durch die Spann- oder Rohrschelle gegen die Mantelfläche der Rohre gepresste Dichtungen in der Form von Manschetten oder dgl. der Abdichtung der Rohrstösse, bzw. der Leckagestellen. Das Verspannen solcher Spann- oder Rohrschellen ist jedoch sehr aufwändig und erfordert die Verwendung spezieller Werkzeuge, bzw. Vorrichtungen, welche beispielsweise als sog. Spannzange ausgebildet sind. Insbesondere wenn beim Verspannen grössere Durchmesserunterschiede zu überbrücken sind, kann mit den bisherigen Verfahren auch der dafür notwendige Zeitaufwand erheblich sein.

Aus der US 2 409 576 ist eine Rohrschelle für Auspuffsysteme bekannt. Diese weist eine Spannschraube und ein damit schwenkbar verbundenes, bügelförmiges Federelement auf. Das Federelement ist Teil des Verschlusses und dient der Kompensation von Dilatationen der Bauteile infolge von Temperaturänderungen. Zum Verspannen der Rohrschelle wird das Federelement an einem Haken des Verschlusses eingehängt und dann mittels der Spannschraube auf einen bestimmten Wert vorgespannt. Das Federelement steht somit dauernd unter einer Vorspannung und ist nicht frei beweglich.

Die FR 2 749 917 zeigt eine Rohrschelle mit durch Muttern verspannbaren Spannschrauben. Am Kopfende der Spannschrauben ist ein Exzenterhebel schwenkbar mit den Spannschrauben verbunden. Der Exzenterhebel dient dem schnellen Öffnen und Schliessen der Rohrschelle. In verspanntem Zustand der Rohrschelle überträgt der Exzenterhebel die Spannkraft und ist nur gegen Überwindung eines definierten Widerstandes in die entspannte Stellung bringbar.

Aus der EP 0 989 349 A ist eine Spann- oder Rohrschelle mit verformbarem, im wesentlichen zylindrischem, wenigstens einen Längsschlitz aufweisendem Gehäuse bekannt. Die am Längsschlitz einander gegenüberliegenden Bereiche des Gehäuses sind als umgebogene Laschen ausgebildet, wobei die Laschen für die Aufnahme von je einem Hohlbolzen ausgebildet sind. Die Spann- oder Rohrschelle ist mittels den die Hohlbolzen quer durchsetzenden, etwa tangential zum Gehäuse verlaufenden Spannschrauben und damit verbindbaren, in den Hohlbolzen angeordneten Muttern verspannbar. Zumindest derjenige Hohlbolzen, in dem die Muttern angeordnet sind, ist im Querschnitt im wesentlichen U-förmig ausgebildet. Die Muttern sind im Hohlbolzen durch eingepresste Fläche räumlich festgelegt.

Die US 2003/0072636 A zeigt einen Gewindebolzen, dessen Kopf mit einem schwenkbaren Bügel verbunden ist. Der Bügel ist wahlweise in unterschiedlichen Drehstellungen quer zur Längsachse des Gewindebolzens durch dessen Kopf verlaufenden Bohrungen einhängbar.

Der Erfindung liegt die Aufgabe zugrunde, eine Spann- oder Rohrschelle zu schaffen, die ohne zusätzliche Werkzeuge und kurzer Zeit verspannbar ist.

Die Mutter ist in einem der Hohlbolzen angeordnet und spatial, dh. räumlich festgelegt, wobei zumindest derjenige Hohlbolzen, in dem die Mutter angeordnet ist, im Querschnitt im wesentlichen U-förmig ausgebildet ist. Die Mutter ist gemäss der Erfindung über wenigstens eine- vorzugsweise etwa quer zur Achsrichtung der Mutter verlaufende-Prägung durch die Mantelstärke des Hohlbolzens zwischen den Schenkein des Uförmig ausgebildeten Hohlboizens- Insbesondere gegen Drehung - fixiert. Durch die Prägung entsteht ein Formschluss zwischen der Mutter und dem Hohlbolzen, welche ein Verschieben oder Verdrehen der Mutter gegenüber dem Hohlbolzen verhindert.

Seitlich der Schlüsselgächen der Mutter sind vorteilhaft jeweils mindestens zwei einander gegenüberliegend angeordnete Prägungen vorgesehen. Diese Prägungen verhindern einerseits ein Verschieben der Mutter in Achsrichtung des Hohlbolzens und andererseits ein Mitdrehen der Mutter beim Anziehen der Spannschrauben.

Zweckmässigerweise sind jeweils zwei Prägungen im Bereich der Oberseite und wenigstens eine Prägung im Bereich der Unterseite der Mutter angeordnet. Durch die Prägung auf der Unterseite der Mutter erfolgt deren Sicherung in axialer, d.h. in Richtung der Achse der Spannschrauben verlaufender Richtung gegen ein Herausfallen der Mutter, wenn die Spannschrauben gelöst sind

Vorzugsweise ist zumindest eine der Spannschrauben direkt oder indirekt mit einem Handgriff zum manuellen Vorspannen der Rohrschelle und/oder zum Bedienen der Spannschraube und/oder zum Tragen der Spann- oder Rohrschelle verbunden, wobei der Handgriff in verspanntem Zustand der Spann- oder Rohrschellen spannkräftefrei und frei schwenkbar gelagert ist

Der Handgriff ersetzt also das Spezialwerkzeug und weist gegenüber einem solchen den wesentlichen Vorteil auf, dass es immer zur Verfügung steht und beispielsweise auch bei einer Demontage der Spann- oder Rohrschelle eingesetzt werden kann. Der Handgriff ist auch bei der Handhabung und Montage, bzw. dem Ausrichten der Spann- oder Rohrschelle sowie bei deren Transport sehr nützlich.

Der Handgriff ist zweckmässigerweise indirekt über wenigstens eine auf dem Schaft der Spannschraube angeordnete Beilagscheibe mit der Spannschraube verbunden. Durch diese Verbindung des Handgriffs mit der Spannschraube kann diese nach dem Lösen mittels des Handgriffs ein- oder ausgeschwenkt, bzw. ein- und ausgerastet werden.

Vorteilhaft sind wenigstens zwei Spannschrauben vorgesehen, wobei beide Spannschrauben mit dem Handgriff verbunden sind. Der Handgriff ist somit zwischen den Spannschrauben angeordnet, was eine symmetrische Kraftverteilung und somit ein gleichmässiges Verspannen der Spann- oder Rohrschelle über deren gesamte Länge ermöglicht

Der Handgriff ist zweckmässig -vorzugweise über ein Gelenk- schwenkbar mit den Spannschrauben verbunden. Durch die schwenkbare Anordnung des Handgriffs kann dieser beim Verspannen der Spann- oder Rohrschelle in der für das Aufbringen der Spankraft optimalen Richtung, vorzugsweise etwa tangential zum Gehäuse ausgerichtet werden. Nach dem Verspannen der Spann- oder Rohrschelle kann der Handgriff so umgeklappt werden, dass er den Umfang des Gehäuses nicht wesentlich überragt.

Der Handgriff ist vorteilhaft nach hinten einschnappbar, abnehmbar und/oder verrastbar mit den Spannschrauben oder mit Beilagscheiben verbindbar bzw. verbunden und vorzugsweise aus einem Draht ausgebildet- Somit kann der Handgriff nach dem Verspannen der Spann- oder Rohrschelle bei Bedarf auch entfernt, bzw. zum Lösen wieder angebracht werden.

Das Gehäuse ist zweckmässigerweise zweiteilig ausgebildet und weist zwei einander etwa diametral gegenüberliegend angeordnete Längsschlitze und Verschlüsse auf, wobei wenigstens eine Spannschraube wenigstens eines Verschlusses mit einem Handgriff verbunden ist. Eine solche Ausbildung ist Insbesondere dann zweckmässig, wenn es sich um grössere Rohrdurchmesser handelt Durch die Aufteilung auf zwei Verschlüsse entsteht ein grösserer Spannbereich, bzw. eine gleichmässigere Kraftverteilung über den Rohrumfang.

Kleinere Spann- oder Rohrschellen werden sehr oft aus montagetechnischen Gründen zweiteilig ausgebildet. Dabei ist es vorteilhaft, dass wenigstens einer der beiden Verschlüsse als Gelenk ausgebildet ist. Solche Verschlüsse können jedoch auch gleichzeitig eine Gelenk- und Verschlussfunktion ausüben.

Die Laschen des Gehäuses sind vorteilhaft gegen die Innenseite des Gehäuses umgebogen. Dadurch entsteht eine glatte Aussenseite des Gehäuses, was sich insbesondere auf die Korrosionsbaständigkeit der Spann- oder Rohrschelle positiv auswirkt. Die auf der Innenseite des Gehäuses liegenden Enden der Laschen werden beim Verspannen der Spann- oder Rohrschelle durch den aussen liegenden Teil des Gehäuses radial gegen das Rohr gepresst. Dadurch entsteht eine zusätzliche reibschlüssige Verbindung zwischen den umgebogenen freien Enden der Laschen und der innenseite des Gehäuses, welche die erforderliche Verbindung entlastet.

Die umgebogenen Enden der Laschen sind zweckmässigerwaise mit dem Umfang des Gehäuses über eine Reihe von Presse-/ Fügeverbindungen (Clinchen) verbunden. Solche Press-/ Fügeverbindung sind gegenüber üblichen Schweissverbindungen insbesondere aus korrosionstechnischen Gründen vorteilhaft, da dabei keine erhöhten Temperaturen und damit verbundene Gefügeänderungen entstehen.

Damit die Hohlbolzen beim Verspannen der Spann- oder Rohrschelle in der gewünschten Drehsteilung ausgerichtet bleiben, ist es zweckmässig, dass die Hohlbolzen mittels In deren Enden einsetzbaren Stopfen gegen unbeabsichtigtes Verdrehen gegenüber den Laschen relativ zur

Lasche gesichert sind. Dazu weisen die Stopfen vorteilhaft eine in einen Schlitz der Laschen und in den Längsschlitz der Hohlbolzen eingreifende Nase auf. Somit bleibt der Schlitz der Laschen und Längsschlitz der Hohlbolzen immer aufeinander ausgerichtet. Auch wenn die Spannschrauben nicht eingesetzt sind.

Die Stopfen sind zweckmässig aus Kunststoff ausgebildet und weisen vorzugsweise eine Fläche für Informations- und/oder Farbaufdruck auf. Durch eine entsprechende Farbgebung der Kunststoffstopfen kann die für den Hersteller der Spann- oder Rohrschelle typische Firmenfarbe (z.B. rot oder blau) oder die vorgesehene Verwendung der Spann- oder Rohrschelle (z.B. gelb für Gasleitungen) optisch signalisiert werden.

Die Erfindung soll nachstehend, anhand der sie beispielsweise wiedergebenden Zeichnungen näher erläutert werden. Es zeigen:
- Fig.1: eine erfindungsgemässe, einteilige Spann- oder Rohrschelle, in stirnseitiger Ansicht,
- Fig. 2: eine Draufsicht der in Fig. 1 dargestellten Spann- oder Rohrschelle, mit zwei Spannschrauben und weggeklapptem Handgriff,
- Fig. 3: eine weitere Ausführung einer erfindungsgemässen, zweiteiligen Spann- oder Rohrschelle, in stirnseitiger Ansicht,
- Fig. 4: eine Draufsicht der in Fig. 3 dargestellten Spann- oder Rohrschelle, mit drei Spannschrauben und weggeklapptem Handgriff,
- Fig. 5: einen erfindungsgemässen Hohlbolzen; in Längsansicht,
- Fig. 6: einen Querschnitt durch den in Fig. 5 dargestellten Hohlbolzen. Entlang der Linie VI-VI, und
- Fig. 7: einen Stopfen zur Dreharretierung der Hohlbolzen

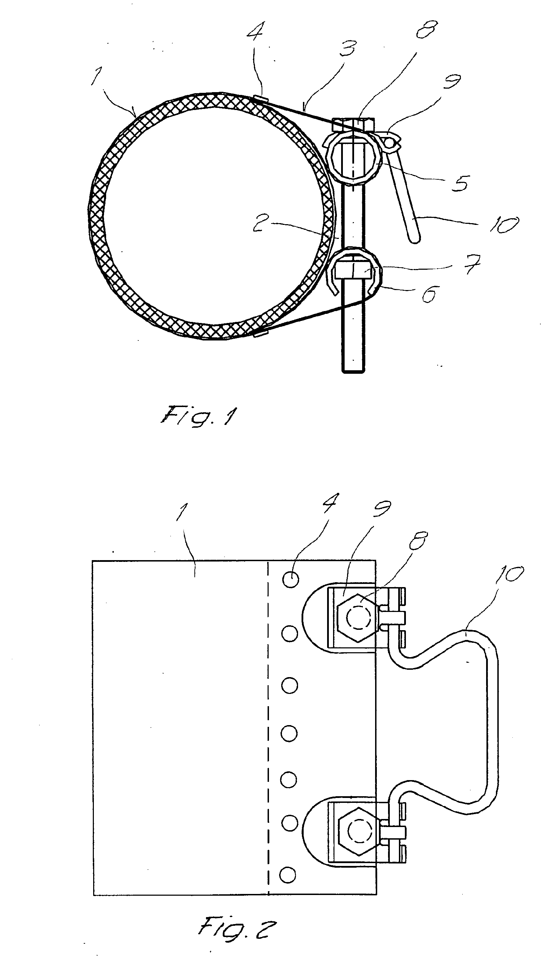

Die aus Fig. 1 und ersichtliche Spann- oder Rohrschelle besteht im wesentlichen aus einem einteiligen Gehäuse 1 mit einem Längsschlitz 2. Die Enden des Gehäuses 1 sind als nach der Innenseite umgebogene Laschen 3 ausgebildet.

Das freie Ende der Laschen 3 ist durch Press-/ Fügeverbindungen 4 mit dem Umfang des Gehäuses 1 verbunden. Diese Press-/ Fügeverbindung 4 wird in der Fachsprache auch als "clinchen" bezeichnet. In die Laschen 3 sind Hohlbolzen 5, 6 eingesetzt. Der Hohlbolzen 5 ist zylindrisch, der Hohlbolzen 6 im Querschnitt C-förmig ausgebildet. In den Hohlbolzen 6 ist eine Mutter 7 eingesetzt und mit dem Hohlbolzen 6 formschlüssig verbunden. Die Hohlbolzen 5, 6 werden quer von Spannschrauben 8 durchsetzt. Zwischen dem Kopf der Spannschraube 8 und dem Hohlbolzen 5 ist eine Beilagscheibe 9 angeordnet. Die Beilagscheibe 9 weist federnde Lappen auf, welche zusammen mit einem bügelförmigen Handgriff 10 ein Gelenk bilden. Der Handgriff 10 ist somit schwenkbar mit den Spannschrauben 8 verbunden und kann, je nach Bedarf, herausgeklappt oder eingeschwenkt werden. Mit Hilfe des Handgriffs 10 kann das Gehäuse 1 beim Verspannen der Spann- oder Rohrschelle unter Annäherung der beiden Hohlbolzen 5, 6 zusammengezogen werden, sodass die Spannschrauben 8 am Hohlbolzen 5 eingehängt werden können.

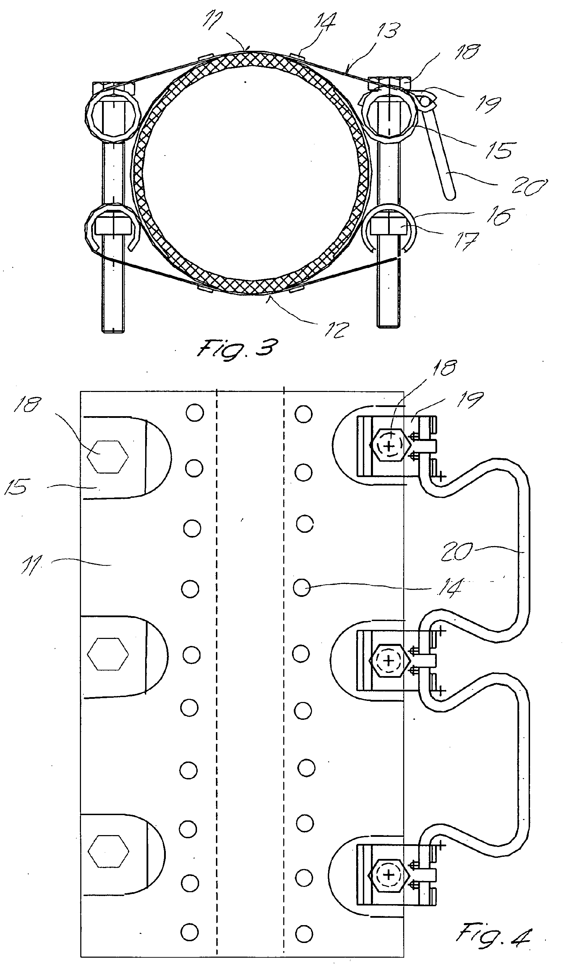

Die aus Fig. 3 und 4 ersichtliche Ausführung unterscheidet sich von der in Fig. 1 und 2 dargestellten Ausführung darin, dass sie aus zwei identischen Gehäusen 11, 12 besteht, welche ebenfalls nach innen umgebogene Laschen 13 aufweisen. Die freien Enden der Laschen 13 sind ebenfalls durch Press-/ Fügeverbindungen mit dem Umfang des Gehäuses 11, 12 verbunden. In die Laschen 13 sind Hohlbolzen 15, 16 eingesetzt. Die Hohlbolzen 15 sind zylindrisch, die Hohlbolzen 16 im Querschnitt C-förmig ausgebildet. In den Hohlbolzen 16 sind Muttern 17 eingesetzt. Die beiden Hohlbolzen 15, 16 werden von Spannschrauben 18 quer durchsetzt. Zwischen dem Kopf der Spannschraube 18 und dem Hohlbolzen 15 ist eine Beilagscheibe 19 angeordnet. Ein Handgriff 20 ist in der selben Art wie bei der in Fig. 1 und 2 dargestellten Ausführung mit den Beilagscheiben 19 schwenkbar verbunden. Der Handgriff 20 dient ebenfalls als Hilfsmittel beim Verspannen der Spann- oder Rohrschelle.

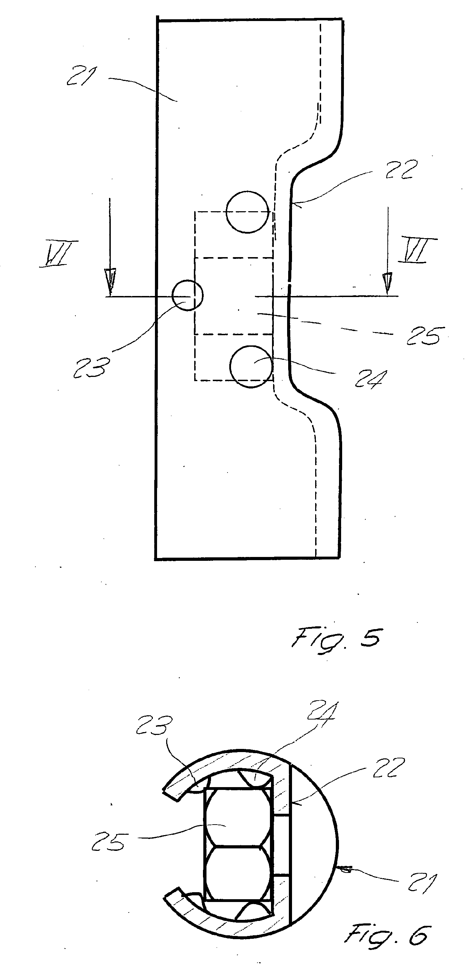

In Fig. 5 und 6 ist ein Hohlbolzen 21 in vergrössertem Massstab dargestellt. Der Hohlbolzen weist im mittleren Bereich eine Abflachung 22 auf und ist in diesem Bereich seitlich mit Prägungen 23, 24 versehen. Die Prägungen 23, 24 dienen der Fixierung einer in den Hohlbolzen 21 eingesetzten, sich an der Innenseite der Abflachung 22 abstützenden Mutter 25. Die Mutter 25 ist somit formschlüssig mit dem Hohlbolzen 21 verbunden. Je nach gewünschter Breite der Spann- oder Rohrschelle, bzw. entsprechender Länge des Hohlbolzens kann der Hohlbolzen 21 eine oder mehrere Abflachungen aufweisen, bzw. von einer oder mehreren Spannschrauben durchsetzt werden.

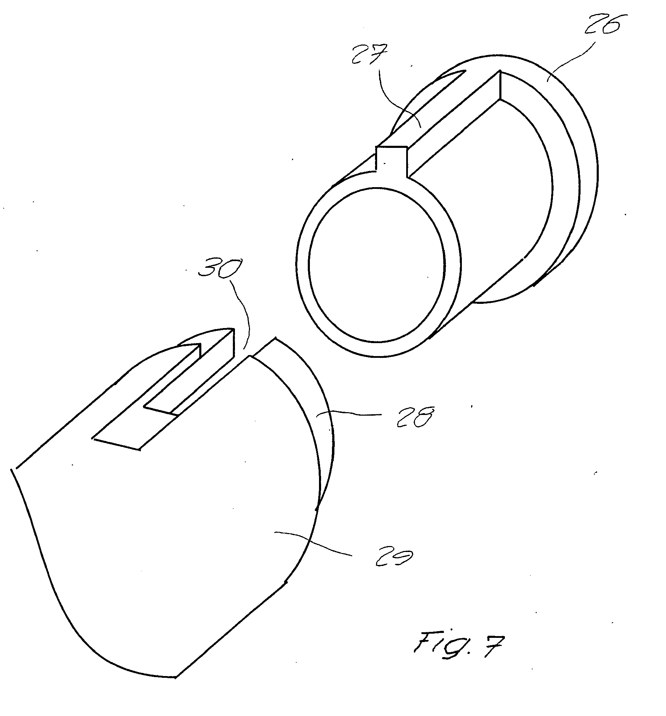

Damit sich die Hohlbolzen in geöffnetem Zustand der Spann- oder Rohrschelle nicht ungewollt verdrehen können, dient ein aus Fig. 7 ersichtlicher Stopfen 26, der stirnseitig in einen Hohlbolzen 28 eingeführt wird. Der Stopfen 26 weist an seinem im Durchmesser verjüngten Teil eine Nase 27 auf. Diese Nase 27 greift am Hohlbolzen 28 und einer Lasche 29 in einen zur Deckung gebrachten Schlitz 30 ein und bildet somit eine Verdrehsicherung zwischen dem Hohlbolzen 28 und der Lasche 29.

### Bezugszeichenliste

- 1: Gehäuse
- 2: Längsschlitz
- 3: Lasche
- 4: Press-/ Fügeverbindung
- 5: Hohlbolzen
- 6: Hohlbolzen
- 7: Mutter
- 8: Spannschraube
- 9: Beilagscheibe
- 10: Handgriff
- 11: Gehäuse
- 12: Gehäuse
- 13: Lasche
- 14: Press-/ Fügeverbindung
- 15: Hohlbolzen
- 16: Hohlbolzen
- 17: Mutter
- 18: Spannschraube
- 19: Beilagscheibe
- 20: Handgriff
- 21: Hohlbolzen
- 22: Abflachung
- 23: Prägung
- 24: Prägung
- 25: Mutter
- 26: Stopfen
- 27: Nase
- 28: Hohlbolzen
- 29: Lasche
- 30: Schlitz

## Patentansprüche

1. Spann- oder Rohrschelle mit verformbarem, im wesentlichen zylindrischen, wenigstens einen Längsschlitz aufweisenden Gehäuse,
wobei die am Längsschlitz (2) einander gegenüberliegenden Bereiche des Gehäuses als umgebogene Laschen (3, 13, 29) ausgebildet sind, mit Hohlbolzen (5,6,15,16,21,28), wobei die Laschen (3, 13, 29) für die Aufnahme der Hohlbolzen (5, 6; 15, 16; 21 28) ausgebildet sind, und wobei die Spann- oder Rohrschelle mittels die Hohlbolzen (5, 6; 15, 16; 21, 28) quer durchsetzenden, etwa tangential zum Gehäuse angeordneten Spannschrauben (8, 18) und damit verbindbaren Muttern (7, 17, 25) in den Hohlbolzen verspannbar ist, wobei die Mutter in einem der Hohlbolzen angeordnet und spatial festgelegt ist, wobei zumindest derjenige Hohlbolzen (16,21), in dem die Mutter angeordnet ist, im Querschnitt im wesentlichen U-förmig ausgebildet ist, **dadurch gekennzeichnet, dass** die Mutter (7, 17, 25) über wenigstens eine - vorzugsweise etwa quer zur Achsrichtung der Mutter verlaufende - Prägung (23, 24) durch die Mantelstärke des Hohlbolzens (21) zwischen den Schenkeln des U-förmig ausgebildeten Hohlbolzens (21) - insbesondere gegen Verdrehung - fixiert ist.

2. Spann- oder Rohrschelle nach Anspruch 1, **dadurch gekennzeichnet, dass** seitlich der Schlüsselflächen der Mutter (25) jeweils mindestens zwei einander gegenüberliegend angeordnete Prägungen (24) vorgesehen sind.

3. Spann- oder Rohrschelle nach Anspruch 1 oder 2, **dadurch gekennzeichnet, dass** jeweils zwei Prägungen (24) im Bereich der Oberseite und wenigstens eine Prägung (23) im Bereich der Unterseite der Mutter (25) angeordnet sind.

4. Spann- oder Rohrschelle nach einem der vorgehenden Ansprüche,
**dadurch gekennzeichnet, dass** zumindest eine der Spannschrauben (8, 18) direkt oder indirekt mit einem Handgriff (10, 20) zum manuellen Vorspannen der Spann- oder Rohrschelle und/oder zum Bedienen der Spannschraube (8, 18) und /oder zum Tragen der Spann- oder Rohrschelle verbunden ist, wobei der Handgriff (10, 20) in verspanntem Zustand der Spann- oder Rohrschelle spannkräftefrei und frei schwenkbar gelagert ist.

5. Spann- oder Rohrschelle nach Anspruch 4, **dadurch gekennzeichnet, dass** der Handgriff (10, 20) indirekt über wenigstens eine auf dem Schaft der Spannschraube (8, 18) angeordnete Beilagscheibe (9, 19) mit der Spannschraube (8, 18) verbunden ist.

6. Spann- oder Rohrschelle nach Anspruch 4 oder 5, **dadurch gekennzeichnet, dass** wenigstens zwei Spannschrauben (8, 18) vorgesehen sind und dass beide Spannschrauben (8, 18) mit dem Handgriff (10, 20) verbunden sind.

7. Spann- oder Rohrschelle nach einem der Ansprüche 4-6, **dadurch gekennzeichnet, dass** der Handgriff (10, 20) -vorzugsweise über ein Gelenk - schwenkbar mit den Spannschrauben (8, 18), bzw. mit auf dem Schaft der Spannschrauben (8,18) angeordneten Beilagscheiben (9, 19) verbunden ist.

8. Spann- oder Rohrschelle nach einem der Ansprüche 4-7, **dadurch gekennzeichnet, dass** der Handgriff (10, 20) einschnappbar, abnehmbar und/oder verrastbar mit den Spannschrauben (8, 18) oder mit den Beilagscheiben (9, 19) verbindbar bzw. verbunden und vorzugsweise aus einem Draht ausgebildet ist.

9. Spann- oder Rohrschelle nach einem der Ansprüche 4-8, **dadurch gekennzeichnet, dass** das Gehäuse (11, 12) zweiteilig ausgebildet ist und zwei einander etwa diametral gegenüberliegend angeordnete Längsschlitze und Verschlüsse aufweist, und dass wenigstens eine Spannschraube (18) wenigstens eines Verschlusses mit dem Handgriff (20) verbunden ist.

10. Spann- oder Rohrschelle nach Anspruch 9, **dadurch gekennzeichnet, dass** wenigstens einer der beiden Verschlüsse als Gelenk ausgebildet ist.

11. Spann- oder Rohrschelle nach einem der vorhergehenden Ansprüche, **dadurch gekennzeichnet, dass** die Laschen (3, 13, 29) des Gehäuses (1, 11, 12) gegen die Innenseite des Gehäuses (1, 11, 12) umgebogen sind.

12. Spann- oder Rohrschelle nach Anspruch 11, **dadurch gekennzeichnet, dass** die umgebogenen "Enden" der Laschen mit dem Umfang des Gehäuses über eine Reihe von Press-/Fügeverbindungen (Clinchen) (4, 14) verbunden sind.

13. Spann- oder Rohrschelle nach einem der vorhergehenden Ansprüche, **dadurch gekennzeichnet, dass** die Hohlbolzen (28) mittels in deren Enden einsetzbaren Stopfen (26) gegen unbeabsichtigtes Verdrehen gegenüber den Laschen gesichert sind.

14. Spann- oder Rohrschelle nach Anspruche 13, **dadurch gekennzeichnet, dass** die Stopfen (26) eine in einen Schlitz (30) der Laschen (29) und den Längsschlitz der Hohlbolzen (28) eingreifende Nase (27) aufweisen.

15. Spann- oder Rohrschelle nach einem der Ansprüche 13, 14, **dadurch gekennzeichnet, dass** die Stopfen (26) aus Kunststoff ausgebildet sind und vorzugsweise eine Fläche für Informations- und/oder Farbaufdruck aufweisen.

## Claims

1. A tensioning or pipe clamp with a deformable, essentially cylindrical housing that features at least one longitudinal slot, wherein the regions of the housing that lie opposite of one another at the longitudinal slot (2) are realized in the form of bent brackets (3, 13, 29) with hollow bolts (5, 6, 15, 18, 21, 28), wherein the brackets (3, 13, 29) are designed for receiving the hollow bolts (5, 6; 15,16; 21, 28) and the tensioning clamp or pipe clamp can be tightened by means of tensioning screws (8, 18) that transversely extend through the hollow bolts (5, 6; 15, 16; 21, 28) and are arranged about tangential to the housing, as well as nuts (7, 17, 25) in the hollow bolts that can be connected thereto, wherein the nut is arranged in one of the hollow bolts and spatially fixed, and wherein at least the hollow bolt (16, 21), in which the nut is arranged, is realized with an essentially U-shaped cross section, **characterized In that** the nut (7, 17, 25) is fixed - particularly against turning - between the limbs of the U-shaped hollow bolt (21) by means of at least one stamping (23, 24) - that preferably extends about transverse to the axial direction of the nut - through the shell of the hollow bolt (21).

2. The tensioning or pipe clamp according to Claim 1, **characterized in that** at least two oppositely arranged stampings (24) are respectively provided laterally of the wrench flats the nut (25).

3. The tensioning or pipe clamp according to Claim 1 or 2, **characterized in that** two stampings (24) are respectively arranged in the region of the upper side and at least one stamping (23) is arranged in the region of the lower side of the nut (25).

4. The tensioning or pipe clamp according to one of the preceding claims, **characterized in that** at least one of the tensioning screws (8, 18) is directly or indirectly connected to a handle (10, 20) in order to manually pretension the tensioning or pipe clamp and/or to operate the tensioning screw (8, 18) and/or to carry the tensioning or pipe clamp, wherein the handle (10, 20) is not subjected to any tensioning forces and supported in a freely pivotable fashion in the tightened state of the tensioning or pipe clamp.

5. The tensioning or pipe clamp according to Claim 4, **characterized in that** the handle (10, 20) is indirectly connected to the tensioning screw (8, 18) by means of at least one washer (9, 19) arranged on the shaft of the tensioning screw (8, 18).

6. The tensioning or pipe clamp according to Claim 4 or 5, **characterized in that** at least two tensioning screws (8, 18) are provided, and **in that** both tensioning screws (8, 18) are connected to the handle (10, 20).

7. The tensioning or pipe clamp according to one of Claims 4-6, **characterized in that** the handle (10, 20) is pivotably connected - preferably by means of an articulation - to the tensioning screws (8, 18) or to washers (9, 19) arranged on the shaft of the tensioning screws (8, 18).

8. The tensioning or pipe clamp according to one of Claims 4-7, **characterized in that** the handle (10, 20) can be or is connected to the tensioning screws (8, 18) or to the washers (9, 19) in a clip-on, removable and/or snap-on fashion and preferably consists of a wire.

9. The tensioning or pipe clamp according to one of Claims 4-8, **characterized in that** the housing (11, 12) is realized in two parts and features two longitudinal slots and closures that are arranged about diametrically opposite of one another, and **in that** at least one tensioning screw (18) of at least one closure is connected to the handle (20).

10. The tensioning or pipe clamp according to Claim 9, **characterized in that** at least one of the two closures is realized in the form of an articulation.

11. The tensioning or pipe clamp according to one of the preceding claims, **characterized in that** the brackets (3, 13, 29) of the housing (1, 11, 12) are bent against the inner side of the housing (1, 11, 12).

12. The tensioning or pipe clamp according to Claim 11, **characterized in that** the bent "ends" of the brackets are connected to the circumference of the housing by means of a series of press-fitting connections (clinches) (4, 14).

13. The tensioning or pipe clamp according to one of the preceding claims, **characterized in that** the hollow bolts (28) are secured against unintentionally turning relative to the brackets by means of plugs (26) that can be inserted into their ends.

14. The tensioning or pipe clamp according to Claim 13, **characterized in that** the plug (26) features a tab (27) that engages into a slot (30) of the brackets (29) and the longitudinal slot of the hollow bolts (28).

15. The tensioning or pipe clamp according to one of Claims 13 or 14, **characterized in that** the plugs (26) are made of plastic and preferably feature a surface for printing information and/or a color impression.

## Revendications

1. Collier de serrage ou pour tuyaux comprenant un logement essentiellement cylindrique présentant au moins une fente longitudinale, sachant que les zones du logement se faisant face l'une à l'autre sur la fente longitudinale (2) sont formées comme des éclisses recourbées (3, 13, 29), avec des boulons creux (5, 6, 15, 16, 21, 28), sachant que les éclisses (3, 13, 29) sont formées pour recevoir les boulons creux (5, 6, 15, 16, 21, 28) et sachant que le collier de serrage ou pour tuyaux peut être serré dans les boulons creux au moyen de vis de serrage (8, 18) disposées de manière environ tangentielle au logement et entremêlant les boulons creux (5, 6, 15, 16, 21, 28) transversalement et d'écrous (7, 17, 25) qui peuvent être reliés à celles-ci, sachant que l'écrou est disposé et fixé de manière spatiale dans un des boulons creux, sachant qu'au moins le boulon creux (16, 21) dans lequel l'écrou est placé, est formé essentiellement en U en section transversale, **caractérisé en ce que** l'écrou (7, 17, 25) est fixé par au moins un estampage (23, 24) - s'étendant de préférence environ transversalement au sens axial de l'écrou - à travers l'épaisseur d'enveloppe du boulon creux (21) entre les branches du boulon creux (21) en U, en particulier contre la rotation.

2. Collier de serrage ou pour tuyaux selon la revendication 1, **caractérisé en ce qu'**au moins deux estampages (24) respectifs disposés en se faisant face l'un à l'autre sont prévus sur les côtés des surfaces de clé de l'écrou (25).

3. Collier de serrage ou pour tuyaux selon la revendication 1 ou 2, **caractérisé en ce qu'**au moins deux estampages (24) sont disposés au niveau de la face supérieure et au moins un estampage (23) est disposé au niveau de la face inférieure de l'écrou (25).

4. Collier de serrage ou pour tuyaux selon l'une des revendications précédentes, **caractérisé en ce qu'**au moins une des vis de serrage (8, 18) est reliée directement ou indirectement à une poignée (10, 20) pour serrer manuellement le collier de serrage ou pour tuyaux et/ou pour actionner la vis de serrage (8, 18) et/ou pour porter le collier de serrage ou pour tuyaux, sachant que la poignée (10, 20), lorsque le collier de serrage ou pour tuyaux est serré, est disposée en étant libre de forces de serrage et en pouvant pivoter librement.

5. Collier de serrage ou pour tuyaux selon la revendication 4, **caractérisé en ce que** la poignée (10, 20) est reliée indirectement à la vis de serrage (8, 18) par au moins une rondelle de calage (9, 19) disposée sur la tige de la vis de serrage (8, 18).

6. Collier de serrage ou pour tuyaux selon la revendication 4 ou 5, **caractérisé en ce qu'**au moins deux vis de serrage (8, 18) sont prévues et **en ce que** les deux vis de serrage (8, 18) sont reliées à la poignée (10, 20).

7. Collier de serrage ou pour tuyaux selon l'une des revendications 4 à 6, **caractérisé en ce que** la poignée (10, 20) est reliée - de préférence par une articulation - de manière pivotante aux vis de serrage (8, 18) respectivement à des rondelles de calage (9, 19) disposées sur la tige des vis de serrage (8, 18).

8. Collier de serrage ou pour tuyaux selon l'une des revendications 4 à 7, **caractérisé en ce que** la poignée (10, 20) est reliée, ou peut être reliée, aux vis de serrage (8, 18) ou aux rondelles de calage (9, 19) en pouvant être encliquetée, retirée et/ou enclenchée ou est formée de préférence d'un fil métallique.

9. Collier de serrage ou pour tuyaux selon l'une des revendications 4 à 8, **caractérisé en ce que** le logement (11, 12) est formé de deux parties et présente deux fentes longitudinales et fermetures se faisant face l'une à l'autre de manière environ diamétrale, et **en ce qu'**au moins une vis de serrage (18) d'au moins une fermeture est reliée à la poignée (20).

10. Collier de serrage ou pour tuyaux selon la revendication 9, **caractérisé en ce qu'**au moins l'une des deux fermetures est formée comme une articulation.

11. Collier de serrage ou pour tuyaux selon l'une des revendications précédentes, **caractérisé en ce que** les éclisses (3, 13, 29) du logement (1, 11, 12) sont recourbées contre la face intérieure du logement (1, 11, 12).

12. Collier de serrage ou pour tuyaux selon la revendication 11, **caractérisé en ce que** les « extrémités » recourbées des éclisses sont reliées au pourtour du logement par une rangée de rivets (4, 14).

13. Collier de serrage ou pour tuyaux selon l'une des revendications précédentes, **caractérisé en ce que** les boulons creux (28) sont sécurisés contre une rotation involontaire par rapport aux éclisses, au moyen de bouchons (26) pouvant être placés dans leurs extrémités.

14. Collier de serrage ou pour tuyaux selon la revendication 13, **caractérisé en ce que** les bouchons (26) présentent un ergot (27) se mettant en prise dans une fente (30) des éclisses (29) et dans la fente longitudinale des boulons creux (28).

15. Collier de serrage ou pour tuyaux selon l'une des revendications 13, 14, **caractérisé en ce que** les bouchons (26) sont fabriqués en plastique et présentent de préférence une surface pour imprimer des informations et/ou une couleur.
